# EUROPÄISCHE PATENTSCHRIFT

(11) **EP 2 408 322 B1**
(45) Veröffentlichungstag und Bekanntmachung des Hinweises auf die Patenterteilung: **22.08.2012**
(21) Anmeldenummer: 10726438.4
(22) Anmeldetag: 18.06.2010
(51) Int. Cl.: A23L 3/54, A23L 3/3418, F26B 3/30, F26B 3/347, H05B 6/78, H05B 6/64

(54) **MVD-VERFAHREN UND VORRICHTUNG ZUR TROCKNUNG UND PUFFUNG VON ORGANISCHEN, WASSERFEUCHTEN PRODUKTEN**
MVD METHOD AND DEVICE FOR DRYING AND BUFFERING ORGANIC MOIST PRODUCTS
PROCÉDÉ ET DISPOSITIF MVD POUR LE SÉCHAGE ET LE PERÇAGE DE PRODUITS ORGANIQUES HUMIDIFIÉS PAR DE L'EAU

(30) Priorität: 18.06.2009 DE 102009025472
(43) Veröffentlichungstag der Anmeldung: 25.01.2012
(73) Patentinhaber: Päx Food AG, 73431 Aalen (DE)
(72) Erfinder: WEFERS, Michael, D-81929 München (DE)
(74) Vertreter: Bohnenberger, Johannes
(86) Internationale Anmeldenummer: PCT/EP2010/003685
(87) Internationale Veröffentlichungsnummer: WO 2010/145835

(56) Entgegenhaltungen:
- WO-A1-2009/049409
- DE-A1- 4 036 112
- DE-A1- 19 710 741
- DE-A1- 19 804 386
- JP-A- 7 255 388
- US-A- 4 640 020
- US-A- 5 135 122
- US-A- 5 980 962
- DROUZAS A E ET AL: "Microwave/vacuum drying of model fruit gels" JOURNAL OF FOOD ENGINEERING, Bd. 39, Nr. 2, Februar 1999 (1999-02), Seiten 117-122, XP002601992 ISSN: 0260-8774

## Beschreibung

Die Erfindung betrifft ein Verfahren und eine Vorrichtung zur Trocknung und Puffung von organischen, wasserfeuchten Produkten.

Getrocknete Nahrungsmittel, insbesondere Obst und Gemüse werden in vielfältiger Form und in zunehmendem Maße in der Nahrungsmittelindustrie verwendet.

Auf dem Markt sind bisher gefriergetrocknete Produkte in guter Qualität erhältlich, jedoch sind diese recht teuer. Konventionell getrocknete Produkte sind zwar preiswerter, jedoch ist ihre Qualität niedriger.

Seit einigen Jahren werden "MVD-Produkte" (Microwave Vacuum Dried) diskutiert, welche neben einer sehr guten Aroma- und hohen Wertstofferhaltung völlig neue Qualitäten aufweisen, wie z.B. hinsichtlich ihrer Farbe oder hinsichtlich des "Mundgefühls". Aufgrund der Problematik der großtechnischen Umsetzung und auch der hiermit verbundenen Kosten haben sich derartige Produkte bisher auf dem Markt noch nicht durchsetzen können.

Aus der WO 97/36502 ist ein Verfahren bekannt, bei welchem nicht vorgetrocknete sondern frische Kartoffelchips (80 bis 90% Wasser) verkleistert, getrocknet und gepufft werden. Die Verkleisterung ist bei den bekannten Verfahren ein wesentlicher Punkt, da sonst eine Puffung nicht stattfinden kann. Um den Puffungseffekt zu erreichen, werden die Produkte bei Atmosphärendruck bis auf 80°C erhitzt. Dann wird der Umgebungsdruck möglichst schnell abgesenkt, so dass die Erhöhung des inneren Dampfdruckes zur Aufpuffung bzw. zu Chips führt. Eine großtechnische Durchführung des Verfahrens ist bis heute problematisch.

Aus der US 3,682,651 ist ein Verfahren bekannt, bei welchem Getreide zunächst befeuchtet und dann gepufft sowie getrocknet werden, wobei Mikrowellenquellen zum Einsatz kommen. Zwar wird in der Druckschrift auch davon gesprochen, dass bei verringertem Druck gearbeitet werden kann, jedoch kommt es hier ausschließlich darauf an, dass der Innendruck in den Getreidekörnern höher ist als der Außendruck.

Weitere Verfahren zur Mikrowellentrocknung / -puffung im Vakuum sind z.B. aus DE 196 43 989 und DE 19 80 43 86 bekannt. Die Endtrocknung der gepufften Produkte bei einem unveränderten Unterdruck mittels Mikrowellen und/oder Infrarot hat sich hierbei jedoch als äußerst problematisch erwiesen, da Bräunungseffekte oder sogar Verbrennungen der Produkte auftreten können. In der Praxis werden daher zur Zeit die nicht fertig getrockneten Produkte aus dem Vakuum ausgeschleust und in konventionellen Trocknern zu Ende getrocknet. Die so hergestellten Produkte sind teuer, erfüllen nicht die gewünschten sehr hohen Qualitätsansprüche und konnten sich bisher nicht auf dem freien Markt behaupten.

Der Erfindung liegt die Aufgabe zu Grunde, ein Verfahren sowie eine entsprechende Vorrichtung aufzuzeigen, mittels derer es möglich ist, in kostengünstiger Weise eine wesentlich verbesserte Produktqualität zu erzielen.

Diese Aufgabe wird durch ein Verfahren nach Anspruch 1 bzw. eine Vorrichtung nach Anspruch 6 gelöst.

Insbesondere wird die Aufgabe durch eine Vorrichtung zur Trocknung und Puffung von organischen, wasserfeuchten Produkten gelöst, das folgende Schritte umfasst:
a) Einführen des wasserfeuchten Produktes in eine erste Kammer;
b) Evakuieren der ersten Kammer auf einen ersten erniedrigten Umgebungsdruck und Zuführen von Mikrowellenenergie aus einer Mikrowellenquelle zur Erhöhung der Temperatur und zur Puffung des wasserfeuchten Produktes und Abpumpen austretender Dämpfe;
c) Mehrfaches Erhöhen des erniedrigten Umgebungsdruckes auf einen weniger erniedrigten zweiten Umgebungsdruck und darauf folgendes Erniedrigen des Umgebungsdruckes auf den ersten erniedrigten Umgebungsdruck, wobei die Erhöhung des Umgebungsdruckes schneller als die Erniedrigung erfolgt;
d) Endtrocknung des Produktes in einer zweiten Kammer unter Zuführung von Infrarotstrahlung und bei einem dritten Umgebungsdruck und
e) Abkühlen und Ausschleusen des Produktes in die Atmosphäre unter Erhöhung des Umgebungsdruckes auf Atmosphärendruck.

Ein wesentlicher Punkt der Erfindung liegt darin, dass die Puffung sowie eine erste Trocknung bei einem niedrigen Druck durch Zuführung von Mikrowellenenergie erfolgen. Die Endtrocknung hingegen erfolgt durch Zuführung von Infrarotstrahlung und zwar ebenfalls bei Unterdruck, wodurch ein Verbrennen des Produktes verhindert wird. Darüber hinaus wird in der ersten Kammer der erniedrigte Druck mehrmals hintereinander abgebaut bzw. wird das Produkt einem etwas erhöhten Druck ausgesetzt, wobei die Erniedrigung des Druckes langsamer erfolgt als die Erhöhung des Druckes. Durch diese Prozedur wird eine erhöhte Stabilität des Produktes erreicht und zwar in einem Maße, wie dies bisher nicht bekannt war.

Vorzugsweise erfolgt während des Anhebens des Umgebungsdruckes, wie dies zuvor beschrieben wurde, keine Zufuhr von Mikrowellenenergie sondern lediglich während der Absenkung des Druckes sowie während einer auf diese "Wechselbehandlung" hin erfolgte Phase eines konstanten (niedrigen) Umgebungsdruckes. Dadurch wird ein optimales Puffungsergebnis erhalten.

Vorzugsweise wird in allen Phasen, bei welchen der Umgebungsdruck erhöht wird, diese Erhöhung des Umgebungsdruckes durch Zufuhr eines Inertgases, insbesondere durch Zufuhr von Stickstoff bewirkt. Auf diese Weise wird der im Produkt noch enthaltene Sauerstoff im Wesentlichen ausgetrieben bzw. durch Stickstoff ersetzt, was die Haltbarkeit des Produktes erheblich erhöht.

Vorzugsweise wird der Druck in der zweiten Kammer, in welcher die Endtrocknung des Produktes durch Zufuhr von Infrarotstrahlung erfolgt, im Wesentlichen konstant gehalten, bis die Ausschleusung erfolgt. Dadurch werden optimale Trocknungsergebnisse erzielt.

Vorzugsweise erfolgt die Zufuhr der Wärmeenergie derart, dass die Temperatur des Produktes in Abhängigkeit vom Umgebungsdruck eingestellt wird. Dadurch wird eine Energieeinsparung erzielt. Dies gilt insbesondere dann, wenn die Temperatur des Produktes nur wenig oberhalb eines sich beim Umgebungsdruck einstellenden Verdampfungsdruck von Wasser eingestellt wird.

In der ersten Kammer wird während einer Anfangsphase, innerhalb derer der Umgebungsdruck vom Atmosphärendruck absinkt bis auf 700 - 500 mbar, noch keine Mikrowellenenergie zugeführt. Dadurch wird das Puffungsergebnis verbessert.

Die Mikrowellenenergie wird vorzugsweise mit einer extrem hohen Leistungsdichte zugeführt, wobei sich Werte von 20 bis 50 kWh/m³ und zwar insbesondere ein Wert um die 30 kWh/m³ als vorteilhaft erwiesen haben.

Der dritte Umgebungsdruck, also der Druck, der bei der Endtrocknung des Produktes durch Infrarotenergie eingestellt wird, ist vorzugsweise niedriger als der erste Umgebungsdruck. Dadurch wird, durch Erhöhung des Wasserdampfdruckgefälles, ein optimales Trocknungsergebnis erzielt.

Die Zufuhr der Strahlungsenergie erfolgt vorzugsweise zeitgesteuert in Abhängigkeit von der Temperatur des Produktes, wodurch nicht nur eine optimale Produktschonung und Wertstofferhaltung, sondern auch ein minimierter Energieverbrauch sichergestellt wird.

Um eine möglichst gleichmäßige Erwärmung (durch Puffung sowie Trocknung) des Produktes durch die Mikrowellenenergie sicherzustellen, wird das Produkt innerhalb des elektrischen Feldes der Mikrowellenenergie bewegt. Diese kontinuierliche Bewegung wird vorzugsweise in Form einer Drehung und eines Hebens und Senkens der Mikrowellenquelle gegenüber dem Produkt bzw. umgekehrt bewirkt, wobei die Amplitude dieser Bewegung in etwa einer halben Wellenlänge der Mikrowellenstrahlung stattfinden soll, so dass das Produkt bzw. Teile des Produktes niemals dauerhaft im Bereich eines Feldstärkemaximums bzw. Feldstärkeminimums während des Bestrahlungsvorganges liegen können. Dadurch wird erreicht, dass eine gleichmäßigere Erwärmung (Trocknung und Puffung) des Produktes stattfindet und gleichzeitig mit einer erhöhten Strahlungsintensität gearbeitet werden kann.

Die oben genannte Aufgabe wird durch eine Vorrichtung gelöst, welche umfasst:
a) eine erste Kammer mit einer Zugangsöffnung zum Einbringen eines Produktträgeres in die erste Kammer;
b) eine zweite Kammer mit Einrichtungen zum Überführen des Produktes von der ersten Kammer in die zweite Kammer und mit Einrichtungen zum Ausschleusen des Produktes;
c) mindestens eine Mikrowellenquelle, die derart in der ersten Kammer angeordnet ist, dass dem Produkt in der ersten Kammer Mikrowellenenergie zur Erhöhung der Temperatur und zur Puffung des wasserfeuchten Produktes zuführbar ist;
d) mindestens eine Infrarotquelle, die derart in der zweiten Kammer angeordnet ist, dass dem Produkt in der zweiten Kammer Infrarotenergie zur Erhöhung der Temperatur und zur Trocknung des Produktes zuführbar ist;
e) mindestens eine Vakuumpumpe, die derart mit der ersten Kammer und der zweiten Kammer verbunden ist, dass ein Umgebungsdruck in der ersten Kammer und ein Umgebungsdruck in der zweiten Kammer erniedrigt werden kann;
f) eine Steuerungseinrichtung, die mit der Vakuumpumpe derart verbunden ist, dass der Umgebungsdruck in der ersten Kammer auf einen ersten erniedrigten Umgebungsdruck und in mehrfacher Wiederholung auf einen weniger erniedrigten zweiten Umgebungsdruck erniedrigt bzw. erhöht werden kann, wobei die Erhöhung des Umgebungsdruckes schneller als die Erniedrigung erfolgt.

Ein wesentlicher Punkt der Vorrichtung liegt also darin, dass ein wechselweises Erhöhen und Erniedrigen des Umgebungsdruckes innerhalb des Vakuums bewerkstelligt werden kann, wodurch eine Stabilisierung der Oberfläche des Produktes stattfindet.

Insbesondere in der ersten Kammer (gegebenenfalls zusätzlich in der zweiten Kammer) sind Heizeinrichtungen an Innenwänden der Kammer derart vorgesehen, dass keine Kondensation des Wassers stattfinden kann, welches aus dem Produkt abgeführt wurde. Dadurch ist eine verbesserte Trocknung bei geringerer Heizungsleistung bzw. Mikrowellenleistung erzielbar.

Um das Produkt dem Verfahren in der ersten Kammer zuzuführen, ist eine Aufnahmevorrichtung vorgesehen, welche einen Produktträger, auf dem sich das Produkt befindet, aufnimmt. Diese Aufnahmevorrichtung ist derart mit einer Bewegungseinrichtung versehen, dass der Produktträger gegenüber der Mikrowellenquelle in allen drei Raumrichtungen während des Trocknungs- und Puffungsvorgangs zyklisch bewegbar ist. Die Bewegungsamplitude entspricht vorzugsweise mindestens einer halben Wellenlänge der angewendeten Mikrowellenstrahlung. Bei z.B. handelsüblichen Mikrowellenquellen mit 2450 MHz beträgt der Hub etwa 60 mm.

Die Aufnahmevorrichtung ist vorzugsweise metallisch, insbesondere als runder Edelstahlteller ausgebildet, der eine seitliche Aufkantung aufweist. Diese seitliche Aufkantung bewirkt, dass eine verminderte Bündelung von Mikrowellenstrahlung am Rand des Tellers erreicht wird.

Vorzugsweise ist eine mikrowellenneutrale Abstandsplatte vorgesehen, welche den Produktträger in einer Entfernung von etwa einer halben Wellenlänge von der metallischen Aufnahmevorrichtung hält. Dadurch ist eine verbesserte Leistungsübertragung der Mikrowellenenergie möglich.

Vorzugsweise ist eine Inertgasquelle, insbesondere eine Stickstoffquelle vorgesehen, die derart steuerbar ist, dass bei jeder Erhöhung des Druckes in der ersten Kammer und/oder in der zweiten Kammer Inertgas zur Druckerhöhung zugeführt wird. Dadurch kann eine sehr schnelle Druckerhöhung erreicht werden. Darüber hinaus wird dadurch erreicht, dass der anfänglich im Produkt vorhandene Sauerstoff durch das Inertgas ersetzt wird, was die Produkthaltbarkeit erheblich erhöht.

Vorzugsweise ist in der zweiten Behandlungskammer, in welcher die Endtrocknung des Produktes erfolgt, eine Inertgasspüleinrichtung vorgesehen, die derart angeordnet ist, dass Brüden, also der aus dem Produkt austretende Dampf im Gegenstrom zu einem Produkttransport abführbar sind.

Bevorzugte Ausführungsformen der Erfindung ergeben sich aus den Unteransprüchen und der nachfolgenden Beschreibung von Ausführungsbeispielen. Hierbei zeigen
- Fig. 1: ein schematisiertes Blockschaltbild einer ersten Ausführungsform der erfindungsgemäßen Vorrichtung,
- Fig. 2: ein Druck/Zeitdiagramm eines Behandlungsvorgangs,
- Fig. 3: ein schematisiertes Blockschaltbild einer zweiten Ausführungsform der erfindungsgemäßen Vorrichtung,
- Fig. 4: eine perspektivische Prinzipdarstellung einer Aufnahmevorrichtung mit darauf befindlichem Produkt,
- Fig. 5: eine schematisierte Schnittdarstellung durch einen Aufnahmeteller mit Abstandshalter und Produktaufnahmevorrichtung und
- Fig. 6: ein Druck/Temperatur-/Zeitdiagramm einer speziellen Ausführungsform eines Behandlungsvorgangs.

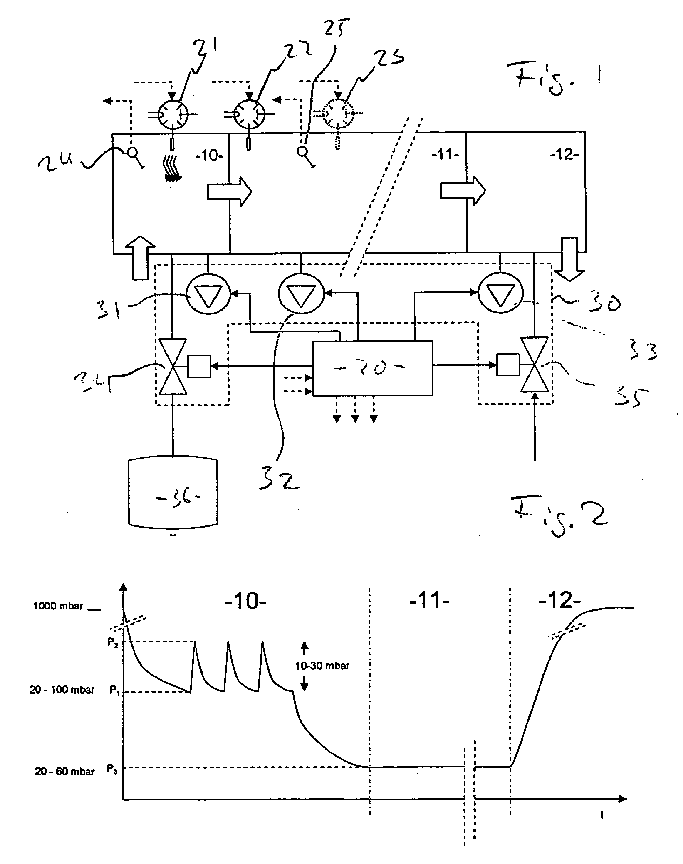

Bei dem in Fig. 1 gezeigten Ausführungsbeispiel der erfindungsgemäßen Vorrichtung ist eine erste Kammer 10 vorgesehen, die mit einer Schleuse versehen ist (nicht dargestellt), um ein behandeltes Produkt in eine nachfolgende zweite Kammer 11 zu überführen. Danach (unter Zwischenschaltung einer nicht gezeigten Schleuse) ist eine dritte Kammer 12 vorgesehen. Aus der dritten Kammer 12 wird das Produkt endgültig in die Atmosphäre ausgeschleust. Die drei Kammern sind voneinander luftdicht abtrennbar.

In der ersten Kammer ist eine erste Wärmequelle 21, nämlich eine Mikrowellenquelle vorgesehen, die insbesondere als Magnetron im Schaltbild dargestellt ist. Dadurch kann ein wasserfeuchtes Produkt, das sich in der Kammer 10 befindet, durch Mikrowellen aufgeheizt werden.

Die zweite Kammer 11 ist größer als die erste Kammer 10 und weist auch entsprechend mehr Wärmequellen 22, 23 auf, die mindestens teilweise als Infrarotquellen ausgebildet sind. Das in der ersten Kammer gepuffte Produkt wird in der zweiten Kammer 11 bis zu einer Endfeuchte getrocknet, mit der das Produkt dann in den Handel kommen kann. Die im Ausführungsbeispiel gemäß Fig. 1 gezeigte Ausführungsform ist mit einer dritten Kammer 12 versehen, die als Ausgangsschleuse dient.

Weiterhin sind in der ersten und in der zweiten Kammer 10 bzw. 11 erste und zweite Temperaturfühler 24, 25 vorgesehen. Die Temperaturfühler 24, 25 sind so ausgebildet, dass sie die Temperatur des jeweils behandelten Produkts abtasteten. Vorzugsweise erfolgt dies über eine berührungslose Messung.

Um den Druck in den Kammer 10 bis 12 einzustellen, ist eine Druckregelungseinrichtung 30 vorgesehen. Diese Druckregelungseinrichtung 30 umfasst Vakuumpumpen 31 bis 33, mittels derer die Innenräume der Kammern 10 bis 12 evakuiert werden können.

Weiterhin ist eine Inertgasquelle 36 vorgesehen, insbesondere ein Stickstofftank, welche über ein Ventil 34 mit der ersten Kammer 10 verbunden ist. Die dritte Kammer 12 ist über ein Ventil 35 mit der Atmosphäre verbunden. Die Ventile, die Pumpen und die Energiequellen (Mikrowellenquellen, Infrarotstrahlungsquellen) sowie die Fühler 24, 25 sind mit einer Steuerung bzw. einem Computer 20 verbunden. Dadurch können einerseits die Temperaturen der Produkte festgestellt, andererseits die Wärmequellen 21 bis 23, die Vakuumpumpen 31 bis 33 und die Ventile 34 und 35 eingestellt werden. Die ebenfalls vorhandenen Druckfühler sind in den Zeichnungen aus Gründen der Übersichtlichkeit nicht dargestellt. Auf jeden Fall kann aber der Computer 20 den Innendruck in den Kammer 10 bis 12 überwachen.

Die Funktionsweise der so ausgebildeten Vorrichtung wird nachfolgend anhand von Fig. 2 näher erläutert, in welcher der Druck in den Kammern über die Zeit angezeigt ist.

Zunächst wird eine gewisse Menge des zu trocknenden und zu behandelnden Produkts in die erste Kammer 10 eingeführt und diese wird druckdicht verschlossen. Dann wird über die erste Vakuumpumpe 31 der Druck innerhalb der ersten Kammer 10 auf einen erniedrigten Umgebungsdruck P₁ abgesenkt, wie dies in Fig. 2 gezeigt ist. Nach einer gewissen Druckabsenkung (dies wird bei der nachfolgend beschriebenen Ausführungsform näher erläutert) wird die Mikrowellenquelle 21 eingeschaltet.

Bei Erreichen des ersten erniedrigten Druckes P₁ öffnet der Computer 20 das Ventil 34, so dass Inertgas aus dem Behälter 36 in die Kammer 10 einströmt und der Druck dadurch sehr schnell auf einen zweiten erniedrigten Druck P₂ ansteigt. Danach wird das Ventil 34 wieder geschlossen und die Vakuumpumpe 31 pumpt wieder Gas aus der Kammer 10 ab, so dass der Druck wieder (langsamer) sinkt. Dieser Vorgang des Absenkens und (abrupten) Anhebens des Innendrucks innerhalb der Kammer 10 wird mehrfach durchgeführt. Während dieser Zeit regelt der Computer 20 auch die Wärmequelle 21 derart, dass das in der Kammer 10 befindliche Produkt bzw. das in diesen wasserfeuchten Produkten enthaltene Wasser aufgeheizt und verdampft wird. Über den ersten Temperaturfühler 24 wird hierbei die Temperatur des wasserfeuchten Produkts ermittelt. Der Computer 20 regelt die Wärmequelle 21 derart, dass dann, wenn die Temperatur des Produktes einen Wert erreicht, der nicht allzu weit über dem Siedepunkt liegt, abgeschaltet bzw. in ihrer Leistung verringert wird. Diese Temperatur, also der Verdampfungspunkt von Wasser, ist abhängig vom Druck, der in der Behandlungskammer 10 herrscht. Nachdem dem Computer 20 der Druck innerhalb der Kammer 10 durch den (nicht gezeigten) Druckfühler mitgeteilt wird, kann der Computer 20 diesen Siedepunkt ermitteln bzw. aus einer Tabelle auslesen. Dieser Vorgang der Druckverringerung bei gleichzeitiger Energiezufuhr und Druckerhöhung bei gleichzeitigem Ausschalten der Mikrowellenenergie wird über eine vorbestimmte Zeitdauer fortgesetzt. Dann wird der Druck im Innenraum der Kammer 10 auf einen Wert P₃ abgesenkt, welcher dem Druck innerhalb der darauf folgenden zweiten Kammer 11 entspricht. Sobald dieser Druck erreicht ist, wird die in der Kammer 10 enthaltene Menge an Produkten in die zweite Kammer 11 überführt. Danach wird die Verbindungstür zwischen der ersten Kammer 10 und der zweiten Kammer 11 (bzw. eine entsprechende Schleuse) wieder druckdicht verschlossen, worauf der soeben beschriebene Einschleusvorgang, also die Überführung von wasserfeuchtem Produkt in die erste Kammer 10 wieder von vorne beginnen kann.

Das in der zweiten Kammer 11 enthaltene Produkt wird nun in dieser Kammer 11 in Richtung auf die dritte Kammer 12 transportiert. Gleichzeitig wird über die Vakuumpumpe 32 Gas aus der zweiten Kammer 11 abgesaugt. Dieses Gas ist im Wesentlichen Wasserdampf, der durch die Energiezufuhr durch die Wärmequellen 22, 23 erzeugt wird. Es sei darauf hingewiesen, dass diese Wärmequellen 22, 23 bei dem in Fig. 1 gezeigten Ausführungsbeispiel als Magnetrone dargestellt sind. Vorzugsweise sind zusätzlich oder auch stattdessen Infrarotquellen vorgesehen. Auch hier arbeitet der Computer 20 wiederum so, dass die Temperatur des Produktes nicht unnötig weit über dem Verdampfungspunkt von Wasser liegt. Das Produkt kann also nicht verbrannt werden. Zur schnelleren Abführung von Brüden wird ein pulsierender Schutzgasstrom im Gegenstrom zur Transportrichtung (siehe Pfeilrichtung) der Produktträger geführt und von der Vakuumpumpe 32 mit abgesaugt. Hierdurch kann die Verweilzeit des Produktes in der Kammer 11 verkürzt bzw. die Trocknungsgeschwindigkeit erhöht werden.

Nach Abschluss des Trocknungsprozesses wird die Verbindungstür zwischen den Kammern 11 und 12 geöffnet. Der Druck im Innenraum der Kammer 12 wurde zuvor in diesem Schritt durch den Computer 20 auf den genannten Druck P₃ abgesenkt, so dass das Druckniveau dem Druck der vorangehenden zweiten Kammer 11 angeglichen wurde. Die in der Kammer 11 enthaltene Menge an Produkt wird nun in die dritte Kammer 12 überführt. Danach wird die Verbindungstür zwischen der zweiten Kammer 11 und der dritten Kammer 12 wieder druckdicht verschlossen.

Über langsames, computergesteuertes Öffnen des Ventils 35 wird nun der Innendruck der dritten Kammer 12 auf Atmosphärendruck angehoben, so dass die Ausschleusung des Produktes über eine entsprechende Austragsklappe oder Austragsschleuse erfolgen kann.

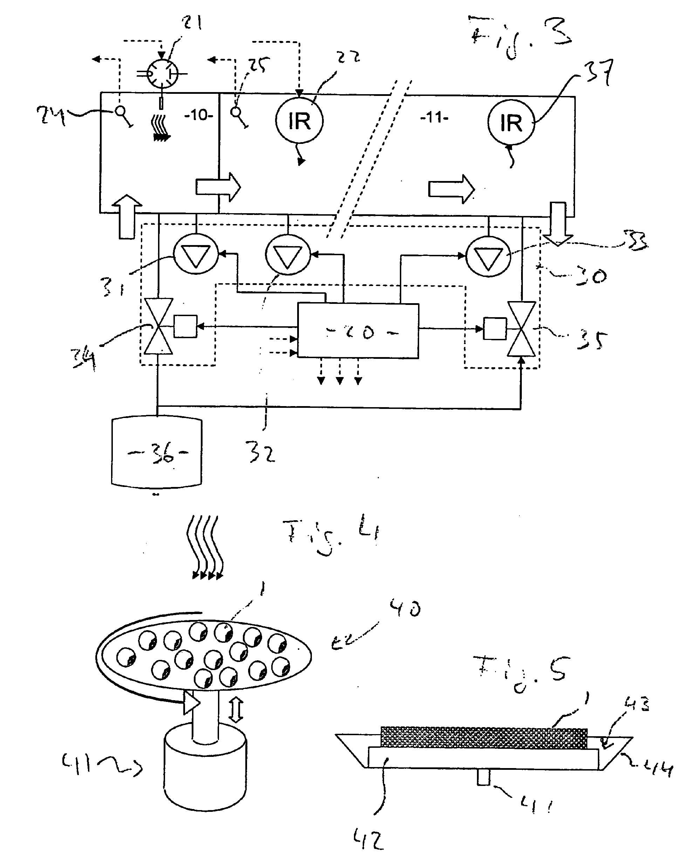

Nachfolgend wird eine weitere Ausführungsform der Erfindung anhand von Fig. 3 näher beschrieben.

Die Ausführungsform nach Fig. 3 unterscheidet sich von der nach Fig. 1 in verschiedener Hinsicht.

Zunächst sind bei dieser Ausführungsform der Erfindung lediglich zwei Kammern, nämlich die erste Kammer 10 und die zweite Kammer 11 vorgesehen. In der ersten Kammer 10 erfolgt die oben beschriebene erste Trocknung und Puffung des Produktes, wobei die Wände der Kammer 10 an ihren Innenflächen mit Heizelementen versehen sind, so dass diese Wände auf einer Temperatur gehalten werden können, bei welcher keine Kondensation des Wasser stattfindet, welches dem Produkt entzogen wurde.

Die zweite Kammer 11 weist als Wärmequelle 22 eine Vielzahl von Infrarotstrahlern oder ähnlichen Vorrichtungen auf, um dem in der Kammer 11 befindlichen Produkt Wärmeenergie zuzuführen. Weiterhin ist eine Infrarotsenke 37 vorgesehen, um dem Produkt nach Beendigung des Trocknungsvorgangs Wärme zu entziehen bzw. es wieder zu kühlen.

Darüber hinaus ist bei dieser Ausführungsform der Erfindung das Ventil 35 einerseits mit der Kammer 11, andererseits mit der Inertgasquelle 36 verbunden, wobei die Steuerung 20 derart ausgebildet ist, dass jeder Druckanstieg in den Kammern 10 oder 11 durch Zugabe von Inertgas aus der Inertgasquelle 36 bewerkstelligt wird.

Wie in den Fig. 4 und 5 schematisiert dargestellt, befindet sich das Produkt 1 auf einer Aufnahmevorrichtung 40, wenn es in der ersten Kammer 10 mit Mikrowellenstrahlung aus der ersten Wärmequelle 21 (Magnetron) bestrahlt wird. Die Aufnahmevorrichtung 40 umfasst eine Bewegungseinrichtung 41, welche das Produkt gegenüber der Mikrowellenquelle 21 sowohl in horizontaler Richtung (z.B. durch Drehung) aber auch in vertikaler Richtung bewegt. Diese Relativbewegung ist derart eingestellt, dass das Produkt 1 um etwa eine halbe Wellenlänge gegenüber der Mikrowellenquelle 21 kontinuierlich bewegt wird. Auf diese Weise wird eine besonders gleichmäßige Erwärmung des Produktes sichergestellt.

Aus Fig. 5 geht hervor, dass die Aufnahmevorrichtung 40 einen Teller 43 umfasst, dessen Rand eine Aufkantung 44 aufweist. Auf dem Teller 43, der vorzugsweise aus Edelstahl gefertigt ist, befindet sich eine Abstandsplatte 42 aus mikrowellendurchlässigem Material, auf welchem wiederum das Produkt 1 z.B. in einer Schale (ebenfalls aus Mikrowellen-durchlässigem Material) befindet. Die Dicke der Abstandsplatte 42 beträgt wiederum eine halbe Wellenlänge. Durch die Aufkantung 44 sowie die Abstandsplatte 42 wird erreicht, dass das Produkt 1 nicht durch stehende Wellen oder sonst wie erhöhte Strahlungsdichten ungleichmäßig erwärmt und gegebenenfalls verbrannt wird.

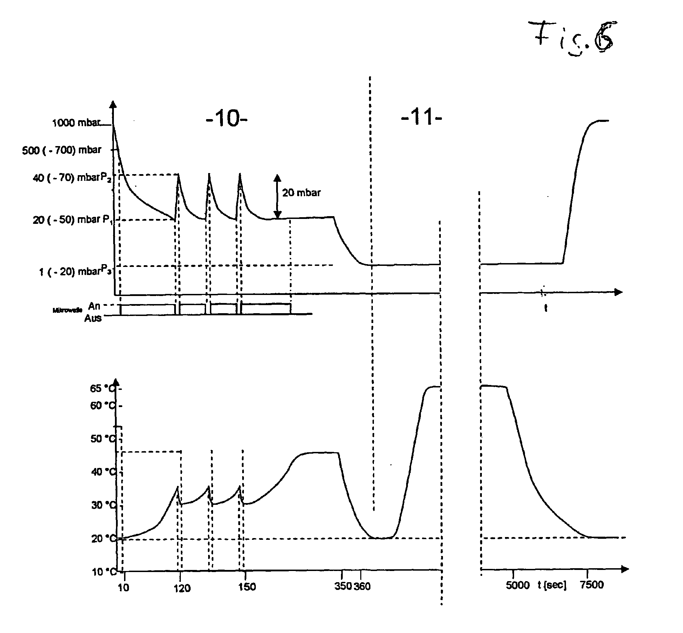

Nachfolgend wird eine besonders bevorzugte Ausführungsform des Verfahrens anhand der Fig. 6 näher beschrieben. Es sei an dieser Stelle darauf hingewiesen, dass die in den Zeichnungen angegebenen Druck-, Temperatur- und Zeitwerte bzw. Wertebereiche als erfindungswesentlich beansprucht werden.

Nach Einschleusung des Produktes in die erste Kammer 10 wird dort der Druck abgesenkt. Nach etwa 10 Sekunden ist der Druck auf 500 bis 700 mbar abgesenkt. Zu diesem Zeitpunkt wird die Mikrowellenquelle 21 eingeschaltet. Demzufolge steigt die Temperatur des noch wasserfeuchten Produktes bis auf etwa 35°C an. Bei Erreichen des ersten verringerten Drucks P₁, der bei etwa 20 bis 50 mbar liegt, wird einerseits die Mikrowellenquellen abgeschaltet und andererseits wird das Ventil 34 geöffnet, so dass Inertgas aus der Inertgasquelle 36 in die erste Kammer 10 strömt und der Druck in dieser ersten Kammer 10 auf 40 bis 70 mbar ansteigt. Dieser Vorgang findet bei ca. 120 Sekunden nach Beginn der Behandlung in der ersten Kammer 10 statt. Die Temperatur sinkt hierbei auf ca. 30°C.

Nach Beendigung des Druckanstiegs, der sehr schnell erfolgt, werden das Ventil 34 geschlossen und die Vakuumpumpe 31 wieder in Betrieb gesetzt. Der Druck sinkt wieder auf den ersten verringerten Umgebungsdruck P₁ (20 bis 50 mbar) ab. Die Mikrowellenquelle 21 wird in dieser Zeit wieder angeschaltet, so dass die Temperatur des Produktes wieder auf ca. 35°C ansteigt. Dieser Vorgang wird bei dem hier gezeigten Ausführungsbeispiel dreimal wiederholt. Die Geschwindigkeit des Druckanstiegs ist jeweils doppelt bis dreimal so hoch wie die Geschwindigkeit der Druckabsenkung.

Nach dem dritten derartigen Druckveränderungsvorgang (ca. 150 Sekunden nach Beginn der Behandlung in der ersten Kammer 10) wird der Druck in der ersten Kammer bis etwa 350 Sekunden nach Beginn der Behandlung in der ersten Kammer konstant auf dem niedrigeren, ersten Umgebungsdruck (20 bis 50 mbar) gehalten. Danach wird der Druck weiter abgesenkt, und zwar auf einen dritten Umgebungsdruck, der bei etwa 1 bis 20 mbar liegt. Bei diesem sehr niedrigen Druck wird das Produkt in die zweite Kammer 11 überführt. Innerhalb der zweiten Kammer 11 wird nun Infrarotenergie zugeführt, so dass das Produkt auf ca. 65°C erwärmt wird. Bei dieser Temperatur und diesem Druck wird das Produkt bis ca. 5.000 Sekunden nach Beginn der Behandlung gehalten. Während dieser Zeit erfolgt eine Endtrocknung des Produktes. Nun wird die Zufuhr von Infrarotenergie durch die Quelle 22 abgeschaltet und die Kühlung des Produktes beginnt, bis (ca. 7.500 Sekunden nach Behandlungsbeginn) das Produkt eine Umgebungstemperatur von etwa 20°C erreicht hat. Zu diesem Zeitpunkt werden die Vakuumpumpen 32 und 33 abgeschaltet und das Ventil 35 geöffnet, so dass Inertgas aus der Inertgasquelle 36 in die zweite Kammer 11 strömt und der Druck dort bis auf Atmosphärendruck ansteigt. Sobald der Atmosphärendruck erreicht ist, wird die zweite Kammer 11 geöffnet und das Produkt der zweiten Kammer 11 entnommen. Daraufhin kann das Produkt luftdicht verpackt und versandfertig gemacht werden.

Aus der obigen Beschreibung ergibt sich, dass verschiedene Verfahrensschritte und Vorrichtungsteile, insbesondere die in der Einleitung beschriebenen Verfahrensschritte und Vorrichtungsteile miteinander beliebig kombinierbar sind. Insbesondere bei den Druck- und Temperaturangaben und ebenso bei den Zeitangaben sind Variationen möglich, wenn auch im vorliegenden Fall bevorzugte Ausführungsformen erläutert wurden.

### Bezugszeichenliste

- 1: Produkt
- 10: erste Kammer
- 11: zweite Kammer
- 12: dritte Kammer
- 20: Computer
- 21: erste Wärmequelle
- 22: zweite Wärmequelle
- 23: dritte Wärmequelle
- 24: erster Temperaturfühler
- 25: zweiter Temperaturfühler
- 30: Drucksteuerungseinrichtung
- 31: erste Vakuumpumpe
- 32: zweite Vakuumpumpe
- 33: dritte Vakuumpumpe
- 34: erstes Ventil
- 35: zweites Ventil
- 36: Inertgasquelle
- 37: Infrarotsenke/Kühleinrichtung
- 40: Aufnahmevorrichtung
- 41: Bewegungseinrichtung
- 42: Abstandsplatte
- 43: Teller
- 44: Aufkantung

## Patentansprüche

1. Verfahren zur Trocknung und Puffung von organischen, wasserfeuchten Produkten, umfassend die Schritte:
a) Einführen des wasserfeuchten Produktes in eine erste Kammer;
b) Evakuieren der ersten Kammer auf einen ersten erniedrigten Umgebungsdruck (P₁) und Zuführen von Mikrowellenenergie aus einer Mikrowellenquelle zur Erhöhung der Temperatur und Puffung des wasserfeuchten Produktes und Abpumpen austretender Dämpfe;
c) Mehrfaches Erhöhen des erniedrigten Umgebungsdrucks (P₁) auf einen weniger erniedrigten zweiten Umgebungsdruck (P₂) und darauf folgendes Erniedrigen des Umgebungsdruckes auf den ersten erniedrigten Umgebungsdruck (P₁), wobei die Erhöhung des Umgebungsdrucks (P₁ nach P₂) schneller als die Erniedrigung erfolgt;
d) Endtrocknung des Produktes in einer zweiten Kammer unter Zufuhr von Infrarot-Strahlung und bei einem dritten Umgebungsdruck (P₃) und
e) Abkühlen und Ausschleusen des Produktes in die Atmosphäre unter Erhöhung des Umgebungsdruckes auf Atmosphärendruck.

2. Verfahren nach Anspruch 1,
**dadurch gekennzeichnet, dass**
die Erhöhung des Umgebungsdruckes in den Schritten c und/oder e durch Zuführen eines Inertgases, insbesondere durch Zuführen von Stickstoff erfolgt und/oder dass die Erhöhung des Druckes (P₁ nach P₂) im Wesentlichen in der halben Zeit wie die Erniedrigung (P₂ nach P₁) erfolgt.

3. Verfahren nach einem der vorhergehenden Ansprüche,
**dadurch gekennzeichnet, dass**
in den Schritten d und/oder e der Umgebungsdruck (P₃) in der zweiten Kammer bis zum Ausschleusen im Wesentlichen konstant gehalten wird.

4. Verfahren nach einem der vorhergehenden Ansprüche,
**dadurch gekennzeichnet, dass**
die Zufuhr der Wärmeenergie derart erfolgt, dass die Temperatur des Produktes in Abhängigkeit vom Umgebungsdruck eingestellt wird, und/oder dass
die Temperatur des Produktes nur wenig oberhalb eines sich beim Umgebungsdruck einstellenden Verdampfungspunktes von Wasser eingestellt wird, und/oder dass
im Schritt b erst ab einem Umgebungsdruck von 500 bis 700 mbar Mikrowellenenergie mit einer extrem hohen Leistungsdichte (z.B. 50 kWh/m³) zugeschaltet wird, und/oder dass
der dritte Umgebungsdruck (P₃) niedriger ist als der erste Umgebungsdruck (P₁), und/oder dass
die Zufuhr der Strahlungsenergie zeitgesteuert, in Abhängigkeit von der Temperatur des Produktes erfolgt.

5. Verfahren nach einem der vorhergehenden Ansprüche,
**dadurch gekennzeichnet, dass**
das Produkt in den Schritten b und c und die Mikrowellenquelle gegeneinander um eine Distanz von mindestens einer halben Wellenlänge der Mikrowellenenergie alternierend bewegt werden, wobei die Bewegung insbesondere durch Drehung und Heben und Senken eines das Produkt tragenden Produktträgers bewirkt wird.

6. Vorrichtung zur Trocknung und Puffung von organischen, wasserfeuchten Produkten, insbesondere Vorrichtung zur Durchführung des Verfahrens nach einem der Ansprüche 1 bis 5, umfassend
a) eine erste Kammer (10) mit einer Zugangsöffnung zum Einbringen eines Produktträgers in die erste Kammer (10);
b) eine zweite Kammer (11) mit Einrichtungen zum Überführen des Produktes von der ersten Kammer (10) in die zweite Kammer (11) und mit Einrichtungen zum Ausschleusen des Produktes;
c) mindestens eine Mikrowellenquelle (21), die derart in der ersten Kammer (10) angeordnet ist, dass dem Produkt in der ersten Kammer (10) Mikrowellenenergie zur Erhöhung der Temperatur und Puffung des wasserfeuchten Produktes zuführbar ist;
d) mindestens eine Infrarotquelle (22, 23), die derart in der zweiten Kammer (11) angeordnet ist, dass dem Produkt in der zweiten Kammer (11) Infrarotenergie zur Erhöhung der Temperatur und zur Trocknung des Produktes zuführbar ist;
e) mindestens eine Vakuum'pumpe (31-33), die derart mit der ersten Kammer (10) und der zweiten Kammer (11) verbunden ist, dass ein Umgebungsdruck (P₁, P₂) in der ersten Kammer (10) und ein Umgebungsdruck (P₃) in der zweiten Kammer (11) erniedrigt werden kann;
f) eine Steuerungseinrichtung (20), die mit der Vakuumpumpe (31) derart verbunden ist, dass der Umgebungsdruck (P₁) in der ersten Kammer (10) auf einen ersten erniedrigten Umgebungsdruck (P₁) und in mehrfacher Wiederholung auf einen weniger erniedrigten zweiten Umgebungsdruck (P₂) erniedrigt bzw. erhöht werden kann, wobei die Erhöhung des Umgebungsdrucks (P₁ nach P₂) schneller als die Erniedrigung (P₂ und P₁) erfolgt.

7. Vorrichtung nach Anspruch 6,
**dadurch gekennzeichnet, dass**
die erste Kammer (10) Heizeinrichtungen zum Heizen von Innenwänden der ersten Kammer (10) derart aufweist, dass eine Kondensation von Wasser verhinderbar ist.

8. Vorrichtung nach einem der Ansprüche 6 oder 7,
**gekennzeichnet durch**
eine Aufnahmevorrichtung (40), um einen Produktträger (43) in der ersten Kammer (10) aufzunehmen, wobei die Aufnahmevorrichtung (40) derart mit einer Bewegungseinrichtung (41) versehen ist, dass der Produktträger (43) gegenüber der Mikrowellenquelle in allen drei Raumrichtungen während des Trocknungs- und Puffungsvorgangs zyklisch bewegbar ist, wobei eine Bewegungsamplitude vorzugsweise mindestens einer halben Wellenlänge der Mikrowellenenergie entspricht.

9. Vorrichtung nach einem der Ansprüche 6 bis 8, insbesondere nach Anspruch 8,
**dadurch gekennzeichnet, dass**
die Aufnahmevorrichtung (40) metallisch, insbesondere als rundes Edelstahlblech ausgebildet ist und eine seitliche Aufkantung (44) aufweist, wobei vorzugsweise eine mikrowellen neutrale Abstandsplatte (42) mit einer Dicke im Bereich einer halben Wellenlänge der Mikrowellenenergie auf der Aufnahmevorrichtung (40) derart vorgesehen ist, dass der Produktträger eine halbe Wellenlänge von der metallischen Aufnahmevorrichtung entfernt ist.

10. Vorrichtung nach einem der Ansprüche 6 bis 9,
**dadurch gekennzeichnet, dass**
eine Inertgasquelle (36), insbesondere eine Stickstoff-Quelle vorgesehen ist, die derart steuerbar ist, dass bei jeder Erhöhung des Druckes in der ersten Kammer (10) und/oder in der zweiten Kammer (11) Inertgas zur Druckerhöhung zugeführt wird.

11. Vorrichtung nach einem der Ansprüche 6 bis 10,
**gekennzeichnet durch**
eine Inertgasspüleinrichtung, die derart in der zweiten Behandlungskammer (11) angeordnet ist, dass Brüden im Gegenstrom zu einem Produkttransport abführbar sind.

## Claims

1. Method of drying and puffing organic, water-moist products, comprising the steps:
a) introducing the water-moist product into a first chamber;
b) evacuating the first chamber to a first reduced ambient pressure (P₁) and supplying microwave energy from a microwave source in order to increase the temperature and to puff the water-moist product, and pumping off emitted vapours;
c) a plurality of times, increasing the reduced ambient pressure (P₁) to a less reduced second ambient pressure (P₂) and thereafter reducing the ambient pressure to the first reduced ambient pressure (P₁), the raising of the ambient pressure (P₁ to P₂) being carried out more rapidly than the reducing;
d) final drying of the product in a second chamber with supply of infrared radiation and at a third ambient pressure (P₃), and
e) cooling and removing the product into the atmosphere with raising of the ambient pressure to atmospheric pressure.

2. Method according to claim 1,
**characterised in that**
the raising of the ambient pressure in steps c and/or e is carried out by supplying an inert gas, especially by supplying nitrogen, and/or **in that** the raising of the pressure (P₁ to P₂) is carried out in substantially half the time as the reducing (P₂ to P₁).

3. Method according to one of the preceding claims,
**characterised in that**
in steps d and/or e the ambient pressure (P₃) in the second chamber is kept substantially constant until removal.

4. Method according to one of the preceding claims,
**characterised in that**
the supplying of thermal energy is so carried out that the temperature of the product is adjusted in dependence on the ambient pressure,
and/or **in that**
the temperature of the product is adjusted to just slightly above the water vaporisation point occurring at the ambient pressure, and/or **in that**
in step b only from an ambient pressure of from 500 to 700 mbar is microwave energy of extremely high power density (for example, 50 kWh/m³) introduced, and/or **in that** the third ambient pressure (P₃) is lower than the first ambient pressure (P₁), and/or **in that**
the supply of radiation energy is carried out in time-controlled manner, in dependence on the temperature of the product.

5. Method according to one of the preceding claims,
**characterised in that**
the product in steps b and c and the microwave source are moved in alternating manner relative to one another through a distance of at least half the wavelength of the microwave energy, the movement being brought about especially by rotating and raising and lowering a product carrier carrying the product.

6. Apparatus for drying and puffing organic, water-moist products, especially an apparatus for carrying out the method according to one of claims 1 to 5, comprising
a) a first chamber (10) having an entry opening for introducing a product carrier into the first chamber (10);
b) a second chamber (11) having devices for transferring the product from the first chamber (10) into the second chamber (11) and having devices for removal of the product;
c) at least one microwave source (21) which is so arranged in the first chamber (10) that microwave energy can be supplied to the product in the first chamber (10) in order to increase the temperature and to puff the water-moist product;
d) at least one infrared source (22, 23) which is so arranged in the second chamber (11) that infrared energy can be supplied to the product in the second chamber (11) in order to increase the temperature and to dry the product;
e) at least one vacuum pump (31-33) which is so connected to the first chamber (10) and the second chamber (11) that an ambient pressure (P₁, P₂) in the first chamber (10) and an ambient pressure (P₃) in the second chamber (11) can be reduced;
f) a control device (20) which is so connected to the vacuum pump (31) that the ambient pressure (P₁) in the first chamber (10) can be reduced to a first reduced ambient pressure (P₁) and, repeatedly a plurality of times, raised to a less reduced second ambient pressure (P₂), the raising of the ambient pressure (P₁ to P₂) being carried out more rapidly than the reducing (P₂ and P₁).

7. Apparatus according to claim 6,
**characterised in that**
the first chamber (10) has heating devices for so heating internal walls of the first chamber (10) that condensation of water is preventable.

8. Apparatus according to one of claims 6 or 7,
**characterised by**
a holding apparatus (40) for holding a product carrier (43) in the first chamber (10), the holding apparatus (40) being so provided with a moving device (41) that the product carrier (43) is cyclically movable relative to the microwave source in all three spatial directions during the drying and puffing procedure, the amplitude of the movement corresponding preferably to at least half the wavelength of the microwave energy.

9. Apparatus according to one of claims 6 to 8, especially claim 8,
**characterised in that**
the holding apparatus (40) is made of metal, especially in the form of a round stainless-steel plate, and has a lateral raised edge (42), there being preferably provided on the holding apparatus (40) a microwave-neutral spacer plate (42) having a thickness in the region of half the wavelength of the microwave energy so that the product carrier is spaced half the wavelength away from the metal holding apparatus.

10. Apparatus according to one of claims 6 to 9,
**characterised in that**
an inert gas source (36), especially a nitrogen source, is provided, which is so controllable that on each raising of the pressure in the first chamber (10) and/or in the second chamber (11) inert gas is supplied in order to raise the pressure.

11. Apparatus according to one of claims 6 to 10,
**characterised by**
an inert gas purge device which is so arranged in the second treatment chamber (11) that exhaust vapours can be taken off in counter-flow to product transport.

## Revendications

1. Procédé de déshydratation et de gonflement de produits organiques humidifiés, comprenant les étapes suivantes :
a. introduction des produits humidifiés dans une première chambre ;
b. dépressurisation de la première chambre jusqu'à une première pression ambiante réduite (P₁), envoi d'énergie microonde issue d'une source microonde pour augmenter la température et pour gonfler le produit humidifié, et pompage des vapeurs émises ;
c. itérations d'une augmentation de la pression ambiante réduite (P₁) jusqu'à atteindre une seconde pression ambiante moins réduite (P₂), suivie d'une réduction de la pression ambiante jusqu'à atteindre la première pression ambiante réduite (P₁), dans lesquelles l'augmentation de la pression ambiante (de P₁ à P₂) se produit plus rapidement que la réduction ;
d. séchage final du produit dans une seconde chambre soumise à un rayonnement infrarouge sous une troisième pression ambiante (P₃), et
e. refroidissement et éjection du produit dans l'environnement ambiant par l'augmentation de la pression ambiante jusqu'à atteindre la pression atmosphérique.

2. Procédé selon la revendication 1, **caractérisé en ce que** l'augmentation de la pression ambiante lors des étapes c et/ou e est obtenue par l'injection d'un gaz inerte, notamment par l'injection d'azote, et/ou **en ce que** l'augmentation de la pression (de P₁ à P₂) se produit sensiblement deux fois plus vite que la diminution de la pression (de P₂ à P₁).

3. Procédé selon l'une quelconque des revendications précédentes, **caractérisé en ce que** la pression (P₃) dans la seconde chambre est maintenue sensiblement constante dans les étapes d et/ou e jusqu'à l'éjection du produit.

4. Procédé selon l'une quelconque des revendications précédentes, **caractérisé en ce que** l'application de l'énergie thermique s'effectue de manière à ce que :
■ la température du produit soit dépendante de la pression ambiante, et/ou
■ la température du produit ne soit fixée que légèrement au-dessus de l'un des points de vaporisation de l'eau imposés par la pression ambiante, et/ou
■ à l'étape b l'énergie microonde ne soit appliquée qu'à partir d'une pression ambiante entre 500 et 700 mbars avec une densité de puissance extrêmement élevée (par exemple 50 kWh/m³), et /ou
■ la troisième pression ambiante (P₃) soit plus petite que la première pression ambiante (P₁), et/ou
■ l'application de l'énergie du rayonnement soit minutée, en fonction de la température du produit.

5. Procédé selon l'une quelconque des revendications précédentes, **caractérisé en ce qu'**aux étapes b et c, le produit et la source microonde sont déplacés périodiquement l'un par rapport à l'autre sur une distance d'au moins une demi-longueur d'onde de l'énergie microonde, le déplacement s'effectuant en particulier par une rotation, une élévation ou un abaissement de l'un des éléments portant le produit.

6. Dispositif pour la déshydratation et le gonflement de produits organiques humidifiés, notamment un dispositif pour la réalisation du procédé selon l'une des revendications 1 à 5, comprenant :
■ une première chambre (10) avec une ouverture permettant d'introduire un élément portant un produit dans la première chambre (10);
■ une seconde chambre (11) avec des équipements permettant le transfert du produit de la première chambre (10) vers la seconde chambre (11) et avec des équipements permettant d'éjecter le produit;
■ au moins une source microonde (21), agencée dans la première chambre (10) de manière à pouvoir appliquer une énergie microonde au produit dans la première chambre (10) afin d'élever sa température et de gonfler le produit humidifié par l'eau;
■ au moins une source infrarouge (22, 23), agencée dans la seconde chambre (11) de manière à pouvoir appliquer une énergie infrarouge au produit dans la seconde chambre (11) afin d'élever la température et de sécher de produit;
■ au moins une pompe à vide (31-33), associée à la première chambre (10) et à la seconde chambre (11) de manière à pouvoir réduire la pression ambiante (P1, P2) dans la première chambre et la pression ambiante (P3) dans la seconde chambre;
■ un moyen de contrôle (20) associé à la pompe à vide (31) de manière à pouvoir réduire la pression ambiante dans la première chambre (10) à une première pression ambiante réduite (P1) et par itérations successives augmenter et respectivement réduire la pression ambiante jusqu'à atteindre une seconde pression moins réduite (P2), de telle sorte que l'augmentation de la pression (de P1 à P2) s'effectue plus rapidement que la réduction de la pression (de P2 à P1).

7. Dispositif selon la revendication 6, **caractérisé en ce que** la première chambre (10) possède des moyens de chauffage pour chauffer les parois internes de la première chambre (10) de manière à éviter une condensation de l'eau.

8. Dispositif selon l'une des revendications 6 ou 7, **caractérisé en ce qu'**un élément de réception (40), apte à recevoir un élément portant le produit (43) dans la première chambre (10), est doté de moyens de déplacement (41), de telle sorte à ce que l'élément portant le produit (43) soit apte à se déplacer relativement à la source microonde dans les trois directions de manière cyclique pendant le processus de séchage et de gonflement, l'amplitude du déplacement correspondant de préférence au moins à la moitié de la longueur d'onde de l'énergie microonde.

9. Dispositif selon l'une des revendications 6 à 8, notamment suivant la revendication 8, **caractérisé en ce que** l'élément de réception (40) est métallique, en particulier formé d'une tôle en acier inoxydable ronde comprenant un dosseret sur un côté, ledit élément de réception (40) possédant de préférence une plaque d'éloignement (42) insensible au rayonnement microonde ayant une épaisseur de l'ordre d'une demi longueur d'onde de l'énergie microonde, de manière à éloigner l'élément portant le produit d'une demi longueur d'onde de l'élément de réception (40) métallique.

10. Dispositif selon l'une des revendications 6 à 9, **caractérisé en ce qu'**une source de gaz inerte (36) est aménagée, en particulier une source d'azote, de telle sorte à ce qu'elle puisse être commandée afin d'introduire du gaz inerte pour augmenter la pression, lors de chaque élévation de la pression dans la première chambre (10) et/ou dans la seconde chambre (11).

11. Dispositif selon l'une des revendications 6 à 10, **caractérisé en ce que** des moyens de purge du gaz inerte sont disposés dans la seconde chambre de traitement (11), de telle sorte à ce que les vapeurs soient évacuées dans le sens contraire aux déplacements du produit.
